# EUROPEAN PATENT APPLICATION

(11) **EP 1 207 370 A1**
(43) Date of publication of application: **22.05.2002**
(21) Application number: 00125401.0
(22) Date of filing: 18.11.2000
(51) Int. Cl.: G01C 21/26, G08G 1/0967

(54) **A method and system for informing motor vehicle drivers about large-scale environmental conditions**

(71) Applicant: Siemens Aktiengesellschaft, 80333 München (DE)
(72) Inventor: Völkel, Andreas, 35619 Braunfels (DE)

(57) **Abstract**

Motor vehicle drivers are informed about large-scale environmental conditions through collecting associated data from various distributed locations, centrally processing such data with respect to an appropriate geographical area, and disseminating information acquired through the processing among motor vehicles for which such geographical area is relevant, for subsequent display to their drivers. In particular, the environmental conditions comprise at least one condition external to the vehicle in question and which condition is sensed by associated sensor means forming part of a motor vehicle.

## Description

The invention relates to a method for informing motor vehicle drivers about large-scale environmental conditions through collecting data associated to such conditions from various distributed locations, centrally processing such data with respect to an appropriate geographical area, and disseminating information acquired through said processing among motor vehicles for which such geographical area is relevant, for subsequent display to said drivers, and to a motor vehicle arranged to operate as a station in such method. Motor vehicle drivers will generally benefit from information relating to environmental conditions in order to better guide their itinerary and/or their instantaneous style of driving. Various categories of such environmental conditions would apply. A traffic jam ahead may advise them to take a detour, impending showers may advise them to lower speed, and other forecasts may induce them to switch general lights and/or mist lights on or off, and so on. The data gathered in this respect may come from satellite weather surveillance, from road-side beacons signaling actual average vehicle speed, or from other sources. The article in Frankfurter Allgemeine Zeitung (FAZ) "Neue Telematik-Dienste: **Trafficmaster kommt** "("New Telematics services, trafficmaster comes"), May 23, 2000 proposes to broaden the categories of data gathered to in-vehicle driving conditions, such as the on/off conditions of such devices as windshield wipers or mistlamps. These data will then be transmitted by satellite communication to a central entity, where the actual processing will take place. The article is quite succinct, and does not disclose any further arrangement for implementing this scheme.

The present inventor has recognized that most of the above (FAZ article) data are binary only. Furthermore, the localization of the measurements underlies a hysteresis, in that an adverse weather condition will generally let the driver switching over the condition too late, which feature may then produce a geographical distortion. Furthermore, the data so gathered are essentially subjective, in that a first driver will find a particular amount of precipitation allowable, while another will not. Finally, the switching over will depend on traffic conditions, for example, in that heavy local traffic will cause more use of the windshield wipers, and the associated data will present less of an indication for actual rain. These and various other aspects will diminish the consistency of the measuring scheme.

In consequence, amongst other things, it is an object of the present invention to gather the data in a more objective manner, and to furthermore guarantee that the data so used will have a better analog character than those data used according to the prior art proposal.

Now therefore, according to one of its aspects the invention is characterized in that said environmental conditions comprise at least one condition external to the vehicle in question and which condition is sensed by associated sensor means forming part of a motor vehicle in question.

By itself, WO 00/46777∼PCT/EP 00/00813, on pages 1 and 18 makes a brief reference to the use of sensors that will sense external conditions such as rain. However, the reference does not go further in this respect, but concentrates on the ***transmitting*** of the data on a relatively low organizational level ***between*** the various vehicles. The insight of the present invention that the central aggregating of local vehicle sensor data will provide vehicles with useful and relatively long-distance information, is absent in the reference.

Preferably, such at least one condition is one of the following: local air temperature, local air humidity, amount of precipitation, distance of vision, and external illumination conditions.

Furthermore, geographical stepwise transitions in one or more of such conditions are preferably curve-wise displayed on an in-vehicle visual display device.

Another preferred embodiment of the invention providing a user friendly interface is characterized by centrally processing said data for supply thereof in an optimized format to an in-vehicle visual display device allowing display thereof in geographical maps of weather and/or road conditions.

The invention also relates to a system being arranged for implementing a method as claimed in Claim 1, and to a motor vehicle arranged to operate as a station in a method as claimed in Claim 1. Further advantageous aspects of the invention are recited in dependent Claims.

These and further aspects and advantages of the invention will be discussed more in detail hereinafter with reference to the disclosure of preferred embodiments, and in particular with reference to the appended Figures that show:
Figure 1, a multi-vehicle environment of the invention;
Figure 2, a vehicle system arrangement;
Figure 3, a service center flow chart;
Figure 4, a weather FCD unit flow chart;
Figure 5, a display showing curves of equal environmental conditions.

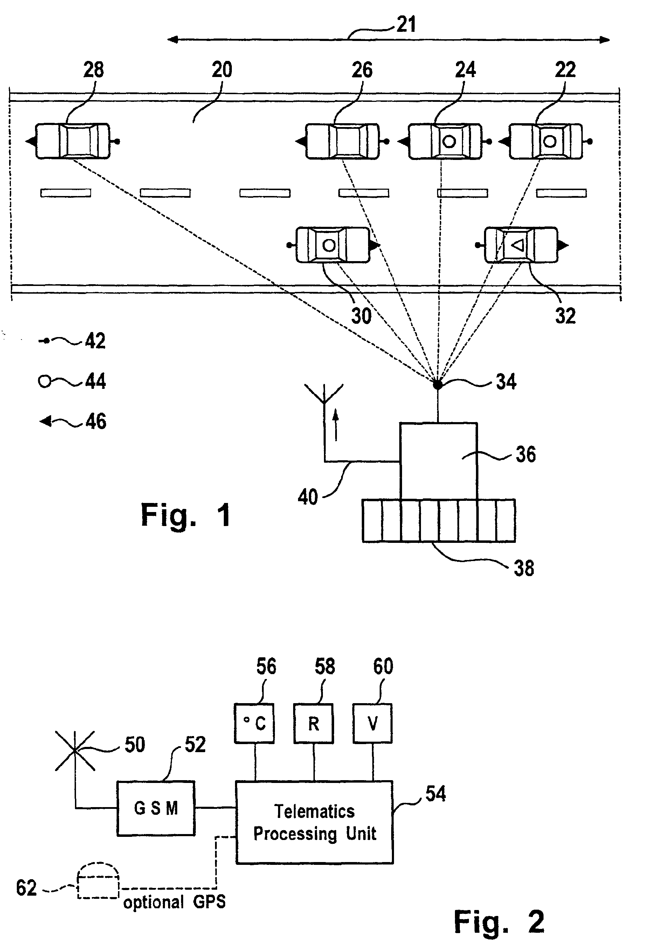

Figure 1 illustrates a multi-vehicle environment of the invention. On two-lane road 20 various vehicles 22, 24, 26, 28, 30, 32 are shown as being driven in continental European fashion, keeping right; such being indicated by a small arrow. The set of vehicles have temperature sensors 42 symbolized by indication, precipitation sensors symbolized by indication 44, and distance of vision sensors symbolized by indication 46. The distribution of these devices need not be uniform over the vehicles. Other vehicles, not provided with these sensors, may be present as well, but have not been shown. Some of the sensors will produce analog signals, but binary data may in principle be present as well. As shown by dotted lines, all vehicles shown communicate with a central entity 36 through its reception antenna 34. The various vehicles will communicate to the central entity 36 the actual readings of their sensor devices and furthermore, their geographical location derived from a satellite based localization system, such as the portable telephone system GSM, or the Global Positioning System GPS. In principle, their location could be determined by another organization such as roadside beacons, but this will necessitate a multi-beacon infrastructure. A particular advantage of the present invention is that with satellite communication no such expensive infrastructure is necessary. The transmitting is executed recurrently, and it is understood that a relatively large number of vehicles can send their data to the central entity 36, as will be discussed more in detail hereinafter.

The central entity 36 will do averaging calculations on the data on the basis of geographical locations, such as a length of a few miles along the road, such as being delimited by arrow 21. Next, the central entity 36 may decide on the reliability of the data as based on the receiving of a sufficient number thereof, or on the reliability as found from spread between successive measurements for the same location. In this case the vehicle 28 is alone in its location, so its data will be considered unreliable. In other situations, data from even a single sensor may be considered sufficiently reliable. Likewise, the vehicle 32 is the only one to have a distance-of-vision sensor, and therefore, the data for this sensor will be discarded too. In consequence, the right hand location 21 of the picture has ***five*** temperature measurements and ***three*** precipitation measurements that will be taken into account, such as for averaging over a brief interval of time, such as one half minute.

The central entity 36 will transiently store the data so gathered, whilst taking appropriate measures to preserve the anonymity of the various vehicles. A very simple organization is that the vehicles will transmit periodically, such as once per second, and the central entity executes its averaging on the data received during a time interval of one second. While averaging of the data from a single vehicle is now being foregone, this means that in any time window all data come from different vehicles, so that their respective identities would be irrelevant. Storage arrangement 38 associated to the central entity 36 illustrates various storage locations that each are associated to a particular geographical location such as indicated by arrow 21, and that each will store the average values or other calculation results generated from particular external conditions for the location in question. Various such other processing operations may be executed, such as curve fitting, trend measuring, detecting stepwise transitions in the measured conditions, either between such locations or between successive time intervals, such as from rain to dry and vice-versa, or from below zero to above zero and vice versa, and the like. The central entity 36 may derive from the information so gathered complete geographical maps of weather/road conditions and supply this data in an optimized format back to the vehicles. Eventually the data include an appropriate geographical code, so that the vehicles can therefrom filter only the information they would need. This would, for example, pertain to only the local information and the information for locations a few miles ahead. The in-vehicle computer may use the information so received to propose to the driver a course of action to take. Such proposal may be displayed on said geographical maps of weather/road conditions. Note that the information so transmitted to the vehicles would in principle be useful also to drivers that do ***not*** contribute to the providing of the set of sensor signals, but that may nevertheless receive the relevant information.

Figure 2 illustrates an in-vehicle system arrangement for operating as a station with the present invention. Sensors for temperature 56, precipitation 58, and distance of vision 60 will locally communicate with central telematics processing unit 54. The latter will provide the data to be communicated to the central entity (block 34/36 in Figure 1) via GSM communication symbolized by block 52 and transmission antenna 50. The use of the GSM-associated communication will allow the central entity 36 (Figure 1) to know the telecom block area where the vehicle is currently located. An optional GPS module 62 may include in the message a more precise location information of the vehicle in question, so that the central entity would more precisely know the location of the vehicle. Other parameters than the ones effectively shown could include local air humidity, external illumination conditions (natural and/or artificial), strength and direction of wind, ice-on-road phenomena, temperature of raindrops, whereas also in-vehicle condition data could be transmitted together with the environment-related data, such as vehicle speed, distance to predecessor, and various others. Also the latter data could be effectively taken into account for processing in the central entity.

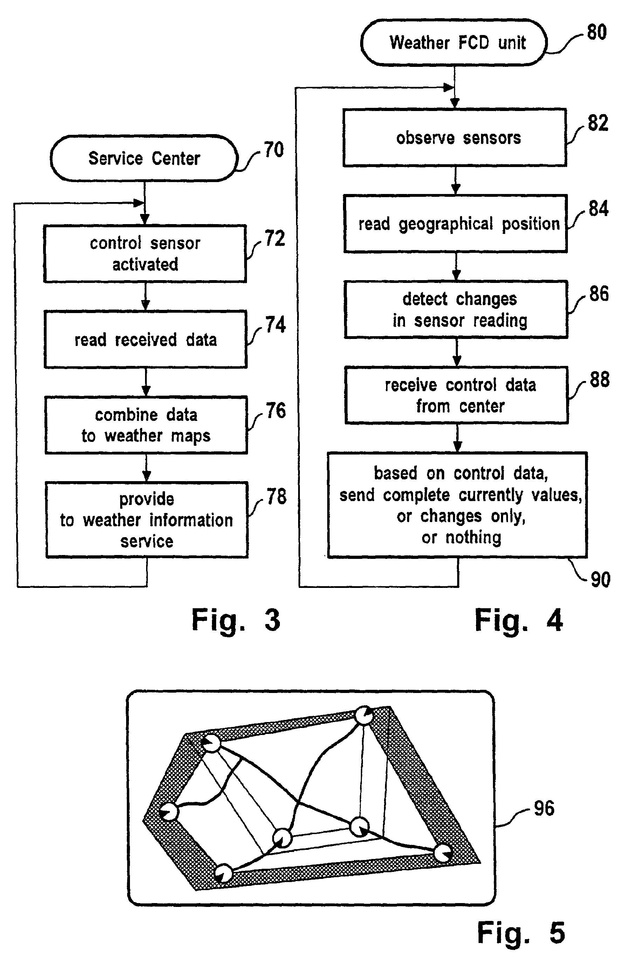

Figure 3 illustrates a flow chart for the service center (central entity, blocks 36, 38 in Figure 1). In block 70, the operation is started and, if necessary, the relevant hardware and software facilities are assigned. In block 72, an activation control signal for the various sensor systems is sent to the vehicles. In block 74, the data from the various vehicles are received. In block 76, the data is combined to weather maps or processed in another manner. In block 78, the information is provided to the weather information service, that also may be be comprised in the central entity 36, 38, and thence transmitted to the various motor vehicles that might use the information. Subsequently, the device loops back to block 72 in an endless loop. In practice, the loop may terminate through added facilities not shown for brevity, such as for maintenance under operator or programmer control.

Figure 4 illustrates a flow chart for an in-vehicle weather FCD (Floating Car Data Service) unit. In block 80, the operation is started and, if necessary, the relevant hardware and software facilities are assigned. In block 82, the various sensors of the vehicle in question are observed and their respective values transiently stored. In block 84, the geographical position is read, either from the GSM or GPS facilities, or in another manner. In block 86, changes in the various sensor readings are detected. In block 88, a control signal is received from the central entity, as mentioned in connection with Figure 3, block 72. In block 90, as based on the control signal received from the central entity 36, 38, either the complete set of currently sensed values is transmitted, or only the changes therein, or nothing. The latter would apply in a situation where the central entity would receive too many data: then the central entity may order a fraction of the vehicles to refrain from transmitting data, such as being based, for example, on the last digit of the vehicle license number. Subsequent to block 90, the device enters into an endless loop back to block 82. In practice, the loop may terminate, such as may be caused by the driver switching off the vehicle. For brevity, such has not been shown in the Figure.

Figure 5 illustrates an in-vehicle display 96 showing curves of equal environmental conditions. In the Figure, various roads have been shown, as well as seven small circles provided with arrows indicating for example a direction of increasing temperature, which can be seen identical to locations, where a car's sensor driving along the roads shown in the example just detects this change. Furthermore, a number of lines that correspond to equal values of a particular parameter have been drawn. Furthermore, a central part of the region as has been indicated in light colour, has been found to represent a first range of corresponding values in temperature, precipitation and distance of vision, such as high temperature, little or no precipitation, and good distance of vision. A surrounding part of the region as indicated in somewhat darker colour, has likewise been found to have a second range of corresponding values in temperature, precipitation and distance of vision, such as lower temperature, more precipitation, and lower distance of vision. Together with a further indication of the value of these quantities in the display not shown, a user person can see therefrom what environmental conditions are ahead, and/or what directions should present better weather, etcetera.

The display may also show current and planned locations of the vehicle, in case a route planning system is on-board. Various indications may be shown, such as to signal adverse weather conditions such as rainstorms. If appropriate, the combination of the route-planner and the signaled environmental conditions may put forward suggestions for amending the route, such as for avoiding adverse weather. Various other means for communicating with the driver could be feasible, such as bleep warning, text display, or voice output. Generally, the scope of the present invention should be recognized from the appended set of Claims, the disclosure being by way of example, rather that being restrictive.

## Claims

1. A method for informing motor vehicle drivers about large-scale environmental conditions through collecting data associated to such conditions from various distributed locations, centrally processing such data with respect to an appropriate geographical area (21), and disseminating information acquired through said processing among motor vehicles (22-28) for which such geographical area is relevant, for subsequent display to said drivers,
said method being **characterized in that** said environmental conditions comprise at least one condition external to the vehicle in question and which condition is sensed by associated sensor means (56, 58, 60) forming part of a motor vehicle in question (22-28).

2. A method as claimed in Claim 1, **characterized in that** such at least one condition is one of the following: local air temperature (56), local air humidity, amount of precipitation (58), distance of vision (60), and external illumination conditions.

3. A method as claimed in Claim 1 or 2, **characterized in that** geographical stepwise transitions in one or more of such conditions are curve-wise displayed on an in-vehicle visual display device (96).

4. A method as claimed in one of Claims 1 to 3, **characterized by** centrally processing said data for supply thereof in an optimized format to an in-vehicle visual display device (96) allowing display thereof in geographical maps of weather and/or road conditions.

5. A system being arranged for implementing a method as claimed in Claim 1 for informing motor vehicle drivers about large-scale environmental conditions through collecting data associated to such conditions from various distributed locations, said system comprising central processing means (36,38) for processing such data with respect to an appropriate geographical area (21), and disseminating means (40) fed by said central processing means (36, 38) for disseminating information acquired through said processing among motor vehicles (22-28) for which such geographical area is relevant, for subsequent display to said drivers,
said system being **characterized in that** said environmental conditions are sensed by sensing means (56, 58, 60) for sensing at least one condition external to the vehicle in question and said sensing means (56, 58, 60) forming part of a motor vehicle in question (22-28).

6. A system as claimed in Claim 5, **characterized in that** such sensing means (56, 58, 60) are arranged for sensing at least one condition from the following: local air temperature (56), local air humidity, amount of precipitation (58), distance of vision (60), and external illumination conditions.

7. A system as claimed in Claim 5 or 6, **characterized in that** an in-vehicle visual display device (96) is arranged for displaying geographical stepwise transitions in one or more of such condition.

8. A system as claimed in one of Claims 5 to 7, **characterized by** said central processing means (36,38) centrally processing said data for supply thereof in an optimized format to an in-vehicle visual display device (96) allowing display thereof in geographical maps of weather and/or road conditions.

9. A motor vehicle having station means arranged for operating as a station (50 ,52, 54) in a method as claimed in Claim 1.
